# EUROPEAN PATENT APPLICATION

(11) **EP 4 837 863 A1**
(43) Date of publication of application: **11.11.2026**
(21) Application number: 25174258.1
(22) Date of filing: 05.05.2025
(51) Int. Cl.: B65G 1/137, B65G 1/04

(54) **ITEM RETRIEVAL**

(71) Applicant: AutoStore Technology AS, 5578 Nedre Vats (NO)
(72) Inventor: FAGERLAND, Ingvar, 5578 Nedre Vats (NO)
(74) Representative: Kilburn & Strode LLP

(57) **Abstract**

The disclosure relates to a method of retrieving items in an automated storage and retrieval system comprising a plurality of storage grids the method comprising moving one or more first items from a first storage container to a first order container at a first storage grid; moving one or more second items from a second storage container to the first order container; and wherein before being moved to the first order container, the one or more second items were stored in a second storage grid.

## Description

### TECHNICAL FIELD

The disclosure relates to item retrieval. More particularly, it relates to item retrieval in an automated storage and retrieval system comprising a plurality of storage grids.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked, and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid, otherwise known as a storage grid. A rail system is arranged on top of the storage grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Some automated storage and retrieval systems comprise multiple, separate storage grids, with items optionally stored across the separate grids. For example, the whole stock of a first item type (stock-keeping unit or SKU) may be stored in a single storage grid or split across multiple storage grids. For multi-grid systems, order fulfilment often requires retrieving different items from separate storage grids and consolidating into a single consignment to fulfil the order.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a method of item retrieval in an automated storage and retrieval system comprising multiple grids shown in Fig. 1 and Fig. 2;
Fig. 6 shows another method of item retrieval in an automated storage and retrieval system comprising multiple grids shown in Fig. 1 and Fig. 2.

### DETAILED DESCRIPTION

In overview, the disclosure relates to a method of retrieving items within an automated storage and retrieval system having multiple storage grids. According to a first aspect, the method involves moving items from a first storage container located at a first storage grid to a first order container, and moving items from a second storage container to the first order container. The items from the second storage container were stored in a second storage grid before being moved to the first order container. The first storage container is a container that resides in the first storage grid for storage of the items stored therein. The second storage container is a container that resides in the second storage grid for storage of the items stored therein. The provision of the first order container into which both the (first) items of the first storage container and the (second) items of the second storage container are moved (i.e., transferred) provides a solution in which the first and second storage containers do not need to be transported away from their respective storage grids.

Typically, if items from both the first storage container and second storage container are required to fulfil a single or multiple orders, typically those storage containers are transported to a common (or respective) picking stations located at the periphery of one of the (or the respective) storage grids. At the workstation, the items are then picked by human or robotic pickers before the storage containers are returned to their respective storage grids.

However, the inventors of the present application have recognised that, particularly in the instance of a multi-grid system, storage containers are typically transported long distances to and from picking stations, leading to increased effective "downtimes" for the storage containers (since during transport they cannot be used to fulfil other orders) and for the robot container-handling vehicles carrying them. In addition, order fulfilment often requires retrieving different items from separate storage grids which leads to increased demands on the container-handling vehicles, increased traffic and other inefficiencies that arise due to redundancies involved in storing items across multiple grids.

The provision of the additional order container overcomes these inefficiencies and issues with container/robot downtime since it allows the first and second storage containers to remain at their respective storage grids, rather than being transported long distances away from the grids and to picking stations. In particular, in some embodiments, the (first) items from the first storage container are moved to the first order container at the first storage grid, before the first order container is transported to the second storage grid. Then, at the second storage grid, the (second) items from the second storage container are moved to the first order container. The first order container thus has retrieved items from both storage grids without the storage containers from either grid leaving their respective grids. The first order container can then be transported to other storage grids to retrieve more items, or to a picking station for the items to be picked to fulfil an order. In general, the additional first order container is not restricted for storage of goods in either storage grid, and is therefore capable of receiving goods required to fulfil existing customer orders from multiple grids, thereby freeing up the storage containers for use elsewhere.

In other embodiments, the (first) items from the first storage container are moved to the first order container at the first storage grid, and the (second) items from the second storage container are moved to a second order container at the second storage grid. Subsequently, the second items in the second order container are transferred to the first order container. In this way, all items from both storage grids are consolidated into a single order container that can be transported to another storage grid to retrieve more items, or to a picking station for the consolidated items to be picked.

The first and second order containers may be transported to a picking station before the items are consolidated into the first order container (before the items from the second order container are transferred to the first order container). Alternatively, either the first order container is transported to the second storage grid, or the second order container is transported to the first storage grid before the items from the second order container are transferred to the first order container.

After receiving the items from the first and second storage containers, the first order container may then be stored in either the first or second storage grid. In this sense, a group of items may be consolidated by moving the items to the first storage container. Storing the consolidated group of items within one of the storage grids can reduce a time at which an order may be packaged and shipped to a customer. This is because consolidation can take place ahead of time, i.e., ahead of the order consisting of those consolidated items being fulfilled. For example, at the time an order is placed, the items can be consolidated in this manner such that when, at a later time, the order is to be fulfilled, this can take place without the delays involved in retrieving items from multiple storage grids.

The first order container may have multiple compartments. Each of these compartments correspond to a respective group of items, such as group of items making up at least part of a single order, or a group of a single type of item. This allows for the completion of multiple orders at once (i.e., if different compartments correspond to different individual orders, or if different compartments each contain multiple items for multiple orders), improving the time and traffic efficiency of the item retrieval.

The second storage container may also comprise one or more compartments corresponding to a respective group of items.

According to a second aspect, the method involves moving items from a first storage container located at a first storage grid to a first order container, and moving items from a second storage container located at a second storage grid to a second order container. The items in both the first and second order containers are subsequently moved to a third order container. Optionally, the third order container is stored in a storage grid of the plurality of storage grids after the items from both the first and second order containers have been moved to the third order container.

In some embodiments, the first and second order containers are transported to a picking station before the items are moved to the third storage container.

There is further provided a system comprising one or more processors and one or more computer-readable media. The computer-readable media store instructions that, when executed by the one or more processors, cause the one or more processors to carry out any of the methods described herein.

### Automated storage and retrieval system overview

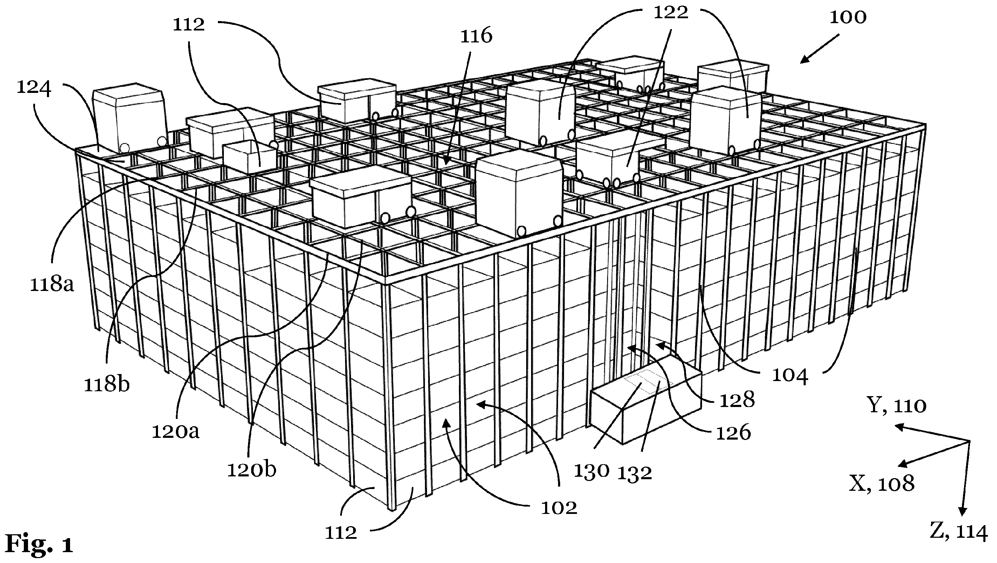

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

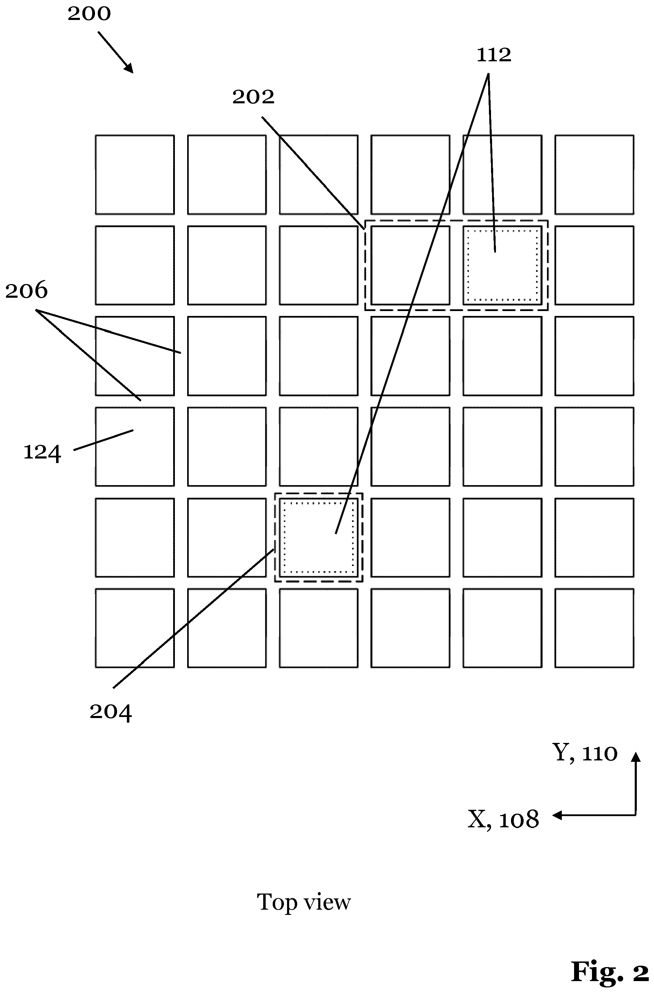

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

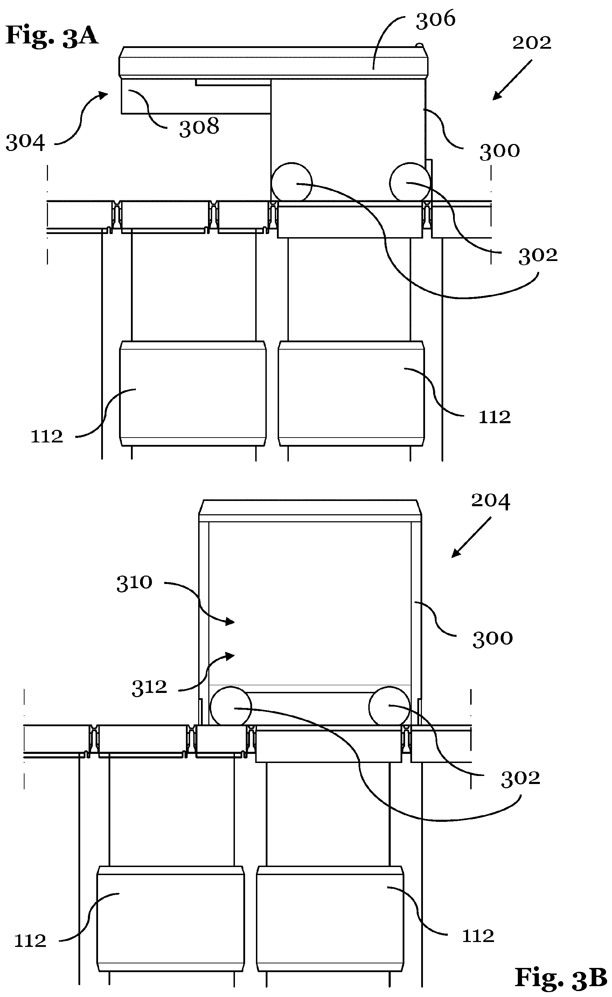

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

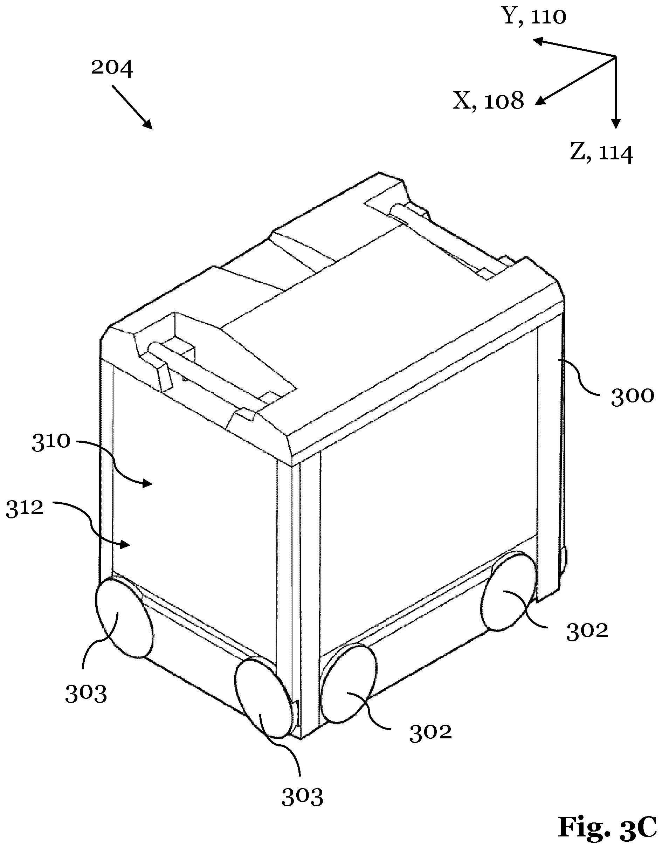

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

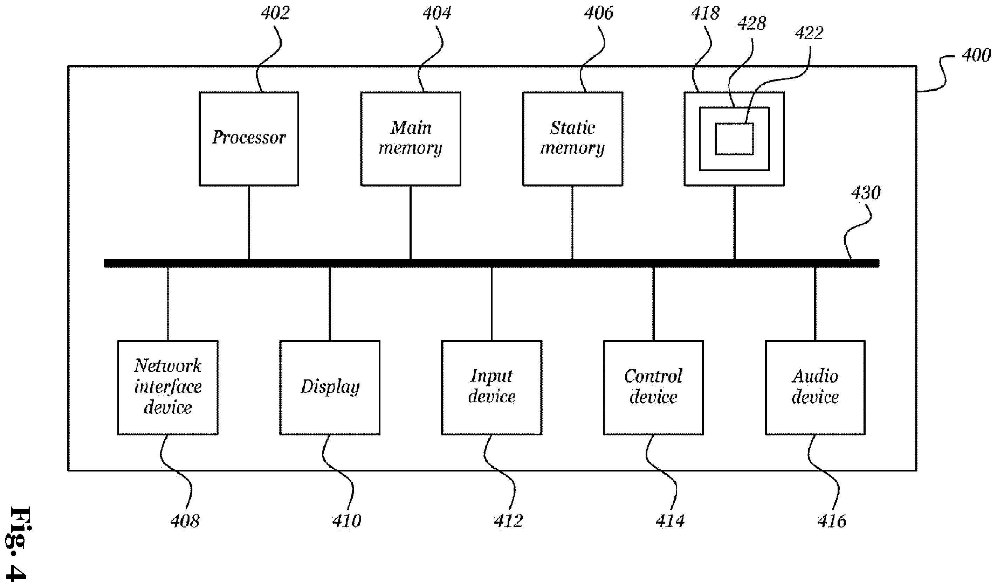

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any retrieval of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Item retrieval in a multi-grid environment

Enhanced methods of retrieving items in an automated storage and retrieval system comprising a plurality of storage grids are provided in the present disclosure.

During operation of the automated storage and retrieval system, items across multiple storage grids may need to be moved. An example in which this may occur is upon receipt of orders from customers for items which are spread across multiple storage grids. In other words, items from different storage grids of a multi-grid system may need retrieving for order fulfilment purposes. An example of this is an order consisting of two or more different items, where those different items are stored across different storage grids of the multi-grid system. Storage containers containing those items required to fulfil those orders may be transported using robotic container-handling vehicles as described previously. As will be elaborated on below, items can be transferred from the storage containers residing in each storage grid to a separate container, referred to herein as an order container. The robotic container-handling vehicles can transport the order containers between storage grids to aid with the completion of an order, rather than transporting the storage containers themselves.

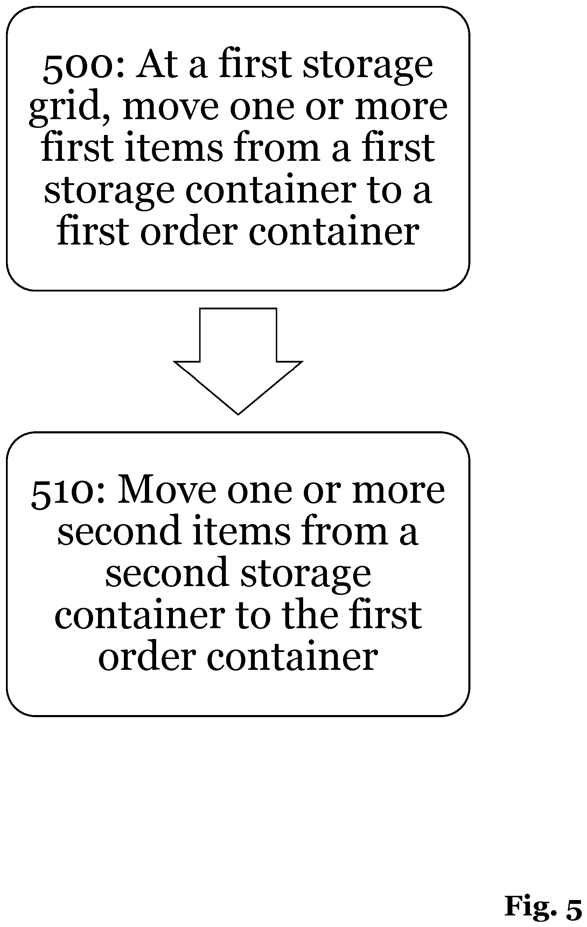

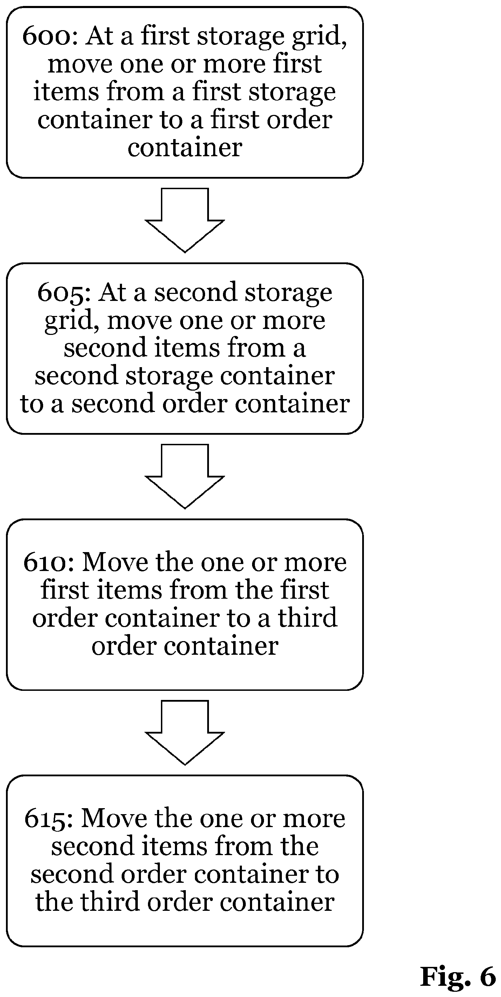

By way of example, implementations of the present disclosure will be described with reference to Figs. 5 and 6. Each possible combination of any of the features described below forms part of the disclosure.

Referring to Fig. 5, a flowchart depicting a first method of retrieving items in an automated storage system comprising a plurality of storage grids is provided.

Step 500 begins at a first storage grid, and comprises moving one or more first items from a first storage container to a first order container. The first storage grid and other storage grids mentioned may substantially be similar to the storage grid depicted in Fig. 1, but with means for the robotic container-handling vehicles and/or containers to travel between nearby storage grids (e.g., using connecting rail systems, robotic vehicle lifts, or any other means apparent to the skilled person to enable transport of containers between storage grids). In this case, at a first storage grid may be within the first storage grid i.e. within the perimeter of the first storage grid. It may also mean atop the first storage grid on the rail system. That is, 'at a first storage grid' or 'within the first storage grid' generally means to be in some sort of contact with an element of the first storage grid. In general, the first storage container is a storage container that resides in the first storage grid. That is, the first storage containers is used to store items in the first storage grid.

Before the one or more first items are moved from the first storage container to the first order container, the first storage container is be stored within the first storage grid as is shown with other storage containers in Fig. 1.

In an example, the one or more first items being moved to the first order container are part of a larger group of first items stored in the first storage container.

That is, in this example, not all of the contents of the first storage container are moved to the first order container. For example, the first storage container may comprise 100 first items, but only five first items are required to fulfil an order. As such, only five items are moved into the first order container at step 500. This can be referred to as item splitting. More generally, the step 500 of moving items from a first storage container to a first order container may comprise transferring a portion or subset of a plurality of items from the first storage container to the first order container.

As mentioned above, the transfer of items from the first storage container to the first order container takes place at the first storage grid. This means that, in order to retrieve items stored in the first storage container for any reason, such as order fulfilment, the first storage container does not need to be transported away from the first storage grid itself (for example, to a picking station located at the periphery of the first storage grid or elsewhere). As a result, the first storage container can remain located within the first storage grid, ready to be employed for any subsequent processes, for example, for subsequent item retrieval to fulfil subsequent orders.

The one or more first items may be moved from the first storage container to the first order container by any plausible means. A robotic vehicle transporting the container may comprise a picking arm configured to pick a certain amount of first items from the first storage container and plate those items into the first order container. Additionally or alternatively, items from the first storage container may be tipped from the first storage container into the first order container. Additionally or alternatively, the first storage container may comprise an open side, and the one or more first items may be pushed into the first order container. These are given as examples useful for understanding the transfer of the one or more first items between containers, but it will be appreciated by the skilled person that any suitable means of transferring items between containers are also possible. It will also be appreciated by the skilled person that the methods of transporting items between containers above is extendable to the transfer of items between any order and storage containers which are introduced below.

At step 510, one or more second items are moved from a second storage container to the first order container. In general, the second storage container is a storage container that resides in a second storage grid that is different from and separate to the first storage grid. That is, the second storage container is used to store items in the second storage grid. The first and second storage grids may be operably connected for the transfer of containers therebetween as described above. Therefore, before the one or more second items are moved from the second storage container to the first order container, the one or more second items were stored in the second storage container within the second storage grid.

As with the first items in the first storage container, the one or more second items may form a larger group of second items stored in the second storage container, but only a portion of the group of second items may be moved into the first order container. More generally, the step 510 of moving items from a second storage container to the first order container may comprise transferring a portion or subset of a plurality of items from the second storage container to the first order container.

After step 510, the first order container contains items from both the first and second storage grids. Those items have been transferred into the first order container from storage containers from the respective first and second storage grids.

In some examples, the one or more second items stored in the second storage container may be transferred to a second order container before being transferred to the first order container. The transfer from the second order container to the first order container may take place anywhere in the multi-grid automated storage and retrieval system, with any suitable transfer mechanism. In particular, the first and second order containers can meet at a common point to consolidate the one or more first and second items into the first order container. This may take place at the first storage grid, the second storage grid, or at a picking station (e.g., a port 130, 132) arranged at the periphery of one of the storage grids. For example, both the first and second order containers may be transported to a common picking station before the items in the second order container are transferred to the first order container. Alternatively, the first order container may be transported to the second storage grid to meet to the second order container, or the second order container may be transported to the first storage grid to meet the first order container. The consolidation of items (when the items of the second order container are moved to the first order container) may complete an 'order' to be shipped to a customer. Once the items have been consolidated into a single order container, that order container may be transported to a picking station or other downstream location for all items to be picked from the container and packaged for the customer order.

Generally speaking, each storage in a multi-grid storage system may be associated with one or more respective order containers. That is, items can be transferred from any number of storage containers into one or more order containers at each storage grid. The items in those one or more order containers from each storage grid may then be consolidated into a single order container at one of the storage grids, or at a picking station.

In examples where the items from the second storage grid are transferred into a second order container before being moved to the first order container, it is not essential for the one or more second items to be transferred directly from the second storage container to the first order container. To elaborate, there may be any number of intermediate containers between the second storage container and the first order container.

Generally speaking, it will be appreciated that the method of Fig. 5 can be extended to any number of storage grids belonging to the same automated storage and retrieval system. The disclose methodologies apply to automated storage and retrieval systems may comprising any number of storage grids, each comprising at least one respective storage container comprising respective items. Items from each respective storage container may be moved to a respective order container. Once in the respective order containers, the items can be moved to a single order container to complete the order. This allows for a faster completion of an order requiring items which are spread across multiple storage grids.

It will be appreciated that the above example isn't limited to the items being transferred directly from each order container into the first order container. Instead, any combination of item transfer can take place before being consolidated in the first order container. It will be appreciated that if many items are stored across many grids, the more order containers assigned to complete the order may increase the speed at which the order is completed.

In another examples, a single order container can be associated with more than one storage grid. For example, a first order container may retrieve items from the first storage grid as explained with reference to step 500 above. Subsequently, the first order container may be transported to the second storage grid by any transportation means (for example a conveyor belt, or, a rail element by which a container-handling vehicle can traverse, or any other suitable means), before the one or more second items from the second storage container are transferred to the first order container.

Generally speaking, this concept can be extended to any number of storage grids. In particular, a single order container may be used to retrieve items from any number of storage grids. Similarly, multiple order containers can exist as explained with reference to previous examples, and each of those respective order containers can be associated with any number of storage grids, before finally consolidating items into a single first order container. These arrangements can help to complete orders at a quicker rate, while also reducing delay between subsequent order completions as has been described above.

In other examples, an order container may be used to retrieve multiple different items from multiple different storage containers in a single grid before transferring the items to other order container(s). This means that the order containers can retrieve every necessary item from a single storage grid before transferring the items in any way as described above to complete an order.

Some examples also include having a plurality of order containers associated with a respective storage grid of the multiple storage grids. For storage grids of increasingly large size, this may be beneficial as it allows for a faster completion of orders as many robotic vehicles can retrieve items simultaneously within a single respective grid before consolidating into a single first order container to complete the order. Any of the above methods and combinations of transferring items are also compatible here.

In essence, the method described above involves two essential steps 500, and 510 which detail the movement of items from a first and second storage grid into a single order container. Between these steps can exist any number of intermediate steps. The intermediate steps are optional, but may increase the efficiency at which items across multiple storage grids are retrieved for the purposes of order fulfilment.

After the order has been completed/assembled, for example after step 510, the items in the first order container may be further packaged for sending to a customer. Additionally or alternatively, they may be stored within a storage grid. That is, the first order container comprising all items of the order may be stored within a storage grid. Or, the items may be packaged then optionally placed into a storage container before being stored in a storage grid.

While the above described examples have been limited to fulfilling a single order at a given time by consolidating items into a first order container, it is also possible to fulfil multiple orders simultaneously using aspects of the above examples. In some examples, multiple orders can comprise similar items, or items located at similar places within each respective storage grid. This allows the robotic vehicles to retrieve these items for multiple orders in a time-efficient manner. Therefore, after finally consolidating the items into the first order container, multiple orders can be within the first order container. As described above, these may then be packaged into multiple packages associated with multiple respective orders.

The above described example can be facilitated by including multiple compartments within the order containers. Each compartment within the order containers may be associated with a respective order. Having each compartment be associated with a single order, the packaging process can be completed faster, as groups of items in the first order container do not need to be searched through to find/access the items for each respective order.

All of the examples described above have involved consolidating items from multiple grids into a first order container, whereby at least a first set of one or more items are transferred into the first order container at a first storage grid. Fig. 6 is a flow chart depicting a method in which items are consolidated into a separate order container. The method begins at step 600: at a first storage grid, one or more first items are moved from a first storage container to a first order container.

Step 605 takes place at a second storage grid, and one or more second items are moved from a second storage container to a second order container.

The transfer of items between the first storage container and first order container, and second storage container and second order container, may take place using any suitable means as described above.

At step 610, the one or more first items are moved from the first order container to a third order container.

At step 615, the one or more second items are moved from the second order container to the third order container.

Moving the one or more first and/or second items to the third order container as described with reference to steps 610 and 615 may take place at any location within the automated storage and retrieval system, i.e. at a picking station at the periphery of a storage grid, or elsewhere conducted by the robotic vehicles which transport the containers as described previously.

In one particular example, the first and second storage containers may be transported to a picking station at the periphery of a storage grid at which the third order container resides. At the picking station, the first items and second items are transferred into the third order container from the respective first and second order containers. The third order container may have a different shape, size, composition, and general form to the first and second order containers. For example, the first and second items may be packaged in the third order container to complete a customer order that is sent to the customer in the third order container.

More generally, steps 610 and 615 may take place in the same location. That is, the one or more first and second items may be transferred to the third container at the same place, without the third container needing to be moved. As described above, that location may be at a picking station. Alternatively, that location may be at one of the first or second storage grids, or at another storage grid. For example, both the first and second order containers may be transported to a third storage grid where the items from the first and second order containers are transferred to the third order container. Additionally, steps 610 and 615 may take place simultaneously. Items from the first and second order containers may be moved to the third order container at the same time at the same location, but it is not limited thereto. Alternatively, steps 610 and 615 may take place at different locations, for example, at the respective storage grids that each of the first and second order containers are associated with.

Although labelled as a third order container, it may however be a packaging, a storage container or any other container. That is such that items from multiple storage grids may be directly consolidated into a container which is not the first order container. This can allow the first order container to be more quickly available to engage in the completion of a subsequent order. Since the items from each of the first and second order containers are transferred to a third order container, the first and second order containers may not contain items for that order, and are thus free to aid in the completion of a next order.

Optional features and examples described with reference to Fig. 5 may similarly be applied to the method of Fig. 6. The details of these features will not be repeated here for brevity, but it would be apparent to the skilled person that all of features described above can apply to the present example, with the difference being that in the present example, items are consolidated in a separate order container to the first order container.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Aspects of the present disclosure are set out below. Each clause below corresponds to an aspect of the disclosure, and each possible combination of any of the clauses corresponds to an aspect of the disclosure. When clauses are combined, two or more instances of an element with the same name are to be understood as referring to the same element, even if the element is introduced by the word "a" more than once. Each possible combination of any features from the clauses below with any features described above also forms part of the disclosure.
1. A method of retrieving items in an automated storage and retrieval system comprising a plurality of storage grids, the method comprising:
   at a first storage grid, moving one or more first items from a first storage container to a first order container; and
   moving one or more second items from a second storage container to the first order container,
   wherein, before being moved to the first order container, the one or more second items were stored in a second storage grid.
2. The method of clause 1, further comprising storing the first order container in a storage grid of the plurality of storage grids after the one or more first items and the one or more second items have been moved to the first order container.
3. The method of any preceding clause, wherein the first order container comprises one or more compartments, and optionally, wherein each compartment of the one or more compartments corresponds to a respective order or item type/stock-keeping unit.
4. The method of any preceding clause, wherein the first storage container is a storage container configured to stay within the first storage grid, and optionally wherein the second storage container is a storage container configured to stay within the second storage grid.
5. The method of any preceding clause, wherein moving the one or more second items from a second storage container to the first order container comprises:
   transporting the first order container to the second storage grid; and
   at the second storage grid, moving the one or more second items from the second storage container to the first order container.
6. The method of any preceding clause wherein before moving to the first order container, the one or more second items are moved to a second order container from the second storage container.
7. The method of any preceding clause wherein the first order container and the second storage container are transported to a picking station at the edge of a storage grid before moving the one or more second items from the second storage container to the first order container.
8. The method of any preceding clause, wherein at least one of the one or more first items are moved from the first order container to the second storage container at the picking station.
9. The method of any preceding clause, wherein the method further comprises either transporting the first order container to the second storage grid, or transporting the second order container to the first storage grid before moving the one or more second items from the second order container to the first order container.
10. The method of any preceding clause wherein the first order container is transported by a robotic vehicle.
11. The method of any preceding clause wherein the one or more first items and/or the one or more second items are moved to the first order container by a robotic arm, or by a pushing mechanism of a robotic vehicle.
12. A method of retrieving items in an automated storage and retrieval system comprising a plurality of storage grids, the method comprising:
   at a first storage grid, moving one or more first items from a first storage container to a first order container;
   at a second storage grid, moving one or more second items from a second storage container to a second order container;
   moving the one or more first items from the first order container to a third order container; and
   moving the one or more second items from the second order container to the third order container.
12. The method of clause 11 further comprising storing the third order container in a storage grid of the plurality of storage grids after the one or more first items and the one or more second items have been moved to the third order container.
13. The method of any of clauses 11 to 12, wherein the third order container comprises one or more compartments, and optionally, wherein each compartment of the one or more compartments forms at least part of a respective order.
14. The method of any of clauses 11 to 13, wherein the first storage container is a storage container configured to stay within the first storage grid, and wherein the second storage container is a storage container configured to stay within the second storage grid.
15. The method of any of clauses 11 to 14, wherein the first order container and the second storage container are transported to a picking station at the edge of a storage grid before moving the one or more second items from the second storage container to the first order container.
16. The method of any of clauses 11 to 15 wherein the one or more first items are moved from the first order container to the third order container at a different location to where the one or more second items are moved from the second order container to the third order container.
17. The method of any preceding clause wherein the one or more first items are selected from a larger group of first items.
18. The method of any preceding clause wherein the one or more second items are selected from a larger group of second items.
19. The method of any preceding clause, wherein the one or more first items are moved from the first storage container to the first order container by a robotic vehicle used to transport the first order container.
20. The method of clause 19 wherein the robotic vehicle moves the one or more first items from the first storage container to the first order container by at least one of:
   a picking arm coupled to the robotic vehicle;
   tipping the first storage container such that the one or more first items fall into the first order container;
   pushing the one or more first items through an open side in the first storage container such that the one or more first items fall into the first order container.
21. The method of any of clauses 11 to 18 wherein the one or more second items are moved from the second storage container to the second order container by a robotic vehicle used to transport the first order container.
22. The method of clause 21, wherein the robotic vehicle moves the one or more second items from the second storage container to the second order container by at least one of:
   a picking arm coupled to the robotic vehicle;
   tipping the first storage container such that the one or more second items fall into the second order container;
   pushing the one or more first items through an open side in the second storage container such that the one or more second items fall into the second order container.

## Claims

1. A method of retrieving items in an automated storage and retrieval system comprising a plurality of storage grids, the method comprising:
at a first storage grid, moving one or more first items from a first storage container to a first order container; and
moving one or more second items from a second storage container to the first order container, wherein before being moved to the first order container, the one or more second items were stored in a second storage grid.

2. The method of claim 1, further comprising storing the first order container in either the first or second storage grid after the one or more first items and the one or more second items have been moved to the first order container.

3. The method of any preceding claim, wherein the first order container comprises one or more compartments, and optionally, wherein each compartment of the one or more compartments corresponds to a respective order or item type.

4. The method of any preceding claim, wherein moving the one or more second items from a second storage container to the first order container comprises:
transporting the first order container to the second storage grid; and
at the second storage grid, moving the one or more second items from the second storage container to the first order container.

5. The method of any preceding claim, wherein moving the one or more second items from a second storage container to the first order container comprises:
at the second storage grid, moving the one or more second items from the second storage container to a second order container; and
moving the one or more second items from the second order container to the first order container.

6. The method of any claim 5, wherein the method further comprises transporting the first and second order containers to a picking station arranged at the periphery of a storage grid of the plurality of storage grids before moving the one or more second items from the second order container to the first order container.

7. The method of claim 5, wherein the method further comprises either transporting the first order container to the second storage grid, or transporting the second order container to the first storage grid before moving the one or more second items from the second order container to the first order container.

8. The method of any of claims 5 to 7 wherein the second storage container comprises one or more compartments, and optionally, wherein each compartment of the one or more compartments corresponds to a respective order or item type.

9. The method of any preceding claim, wherein the one or more first items are moved from the first storage container to the first order container by means of at least one of:
a robotic picking arm;
a tipping mechanism configured to tip the first storage container such that the one or more first items fall into the first order container;
a pushing mechanism configured to push the one or more first items through an open side in the first storage container such that the one or more first items fall into the first order container.

10. The method of any preceding claim, wherein the first storage container comprises a plurality of items, and wherein the one or more first items moved from the first storage container to the first order container consists of a subset of the first plurality of items.

11. A method of retrieving items in an automated storage and retrieval system comprising a plurality of storage grids, the method comprising:
at a first storage grid, moving one or more first items from a first storage container to a first order container;
at a second storage grid, moving one or more second items from a second storage container to a second order container;
moving the one or more first items from the first order container to a third order container; and
moving the one or more second items from the second order container to the third order container.

12. The method of claim 11, further comprising storing the third order container is stored in a storage grid of the plurality of storage grids after the one or more first items and the one or more second items have been moved to the third order container.

13. The method of claim 11 or 12, wherein the method further comprises transporting the first and second order containers to a picking station arranged at the periphery of a storage grid of the plurality of storage grids before moving the one or more first and second items to the third order container.

14. A system comprising one or more processors and one or more computer-readable media storing instructions that, when executed by one or more processors, cause the one or more processors to carry out the method of any preceding claim.

15. A computer-readable medium storing instructions that, when executed by one or more processors, cause the one or more processors to carry out the method of any of claims 1 to 13.
